# EUROPEAN PATENT APPLICATION

(11) **EP 0 861 911 A1**
(43) Date of publication of application: **02.09.1998**
(21) Application number: 97937882.5
(22) Date of filing: 02.09.1997
(51) Int. Cl.: C22C 21/02, B23K 9/04, B23K 35/30

(54) **ALLOY HAVING EXCELLENT RESISTANCE AGAINST THERMAL FATIGUE, ALUMINUM ALLOY HAVING EXCELLENT RESISTANCE AGAINST THERMAL FATIGUE, AND ALUMINUM ALLOY MEMBER HAVING EXCELLENT RESISTANCE AGAINST THERMAL FATIGUE**

(30) Priority: 03.09.1996 JP 253744/96
(71) Applicant: Toyota Jidosha Kabushiki Kaisha, Toyota-shi, Aichi-ken 471-71 (JP)
(72) Inventor: IKUNO, Hajime, K.K. Toyota Chuo Kenkyusho, Aichi-gun, Aichi-ken 480-11 (JP); HORI, Masanao, K. K. Toyota Chuo Kenkyusho, Aichi-gun, Aichi-ken 480-11 (JP); AWANO, Yoji, K. K. Toyota Chuo Kenkyusho, Aichi-gun, Aici-ken 480-11 (JP); IWANAGA, Shogo, K. K. Toyota Chuo Kenkyusho, Aichi-gun, Aichi-ken 480-11 (JP); NAKANO, Osamu, Toyota Jidosha Kabushiki Kaisha, Toyota-shi, Aichi-ken 471-71 (JP)
(74) Representative: Winter, Konrad Theodor, Dipl.-Ing.
(86) International application number: JP9703074
(87) International publication number: WO9810109

(57) **Abstract**

The alloy having excellent resistance against thermal fatigue comprises a metal matrix and heat-resistant particles X dispersed in the matrix and having a shorter diameter of less than 20 µm and a longer diameter of less than 50 µm, the heat-resistant particles being contained in an amount of 5 to 25 % by volume, and the thermally unstable deposited particles being contained in said matrix in an amount of not more than 1 % by weight. The aluminum alloy having excellent resistance against thermal fatigue contains 4 to 12 % by weight of Si, not more than 0.2 % by weight of Cu, and not more than 0.2 % by weight of Mg, the remainder being aluminum and impurities. The aluminum alloy member forms a highly resistant portion against thermal fatigue by padding said alloy on the surface of the aluminum alloy base metal where thermal strain concentrates.

## Description

### Field of the Invention

The present invention relates to an alloy having excellent thermal fatigue resistance, an aluminum alloy having excellent thermal fatigue resistance, and an aluminum alloy member having excellent thermal fatigue resistance.

### Description of the Related Art

Conventionally, as an aluminum alloy for a cylinder head, an alloy consisting essentially of Cu in an amount of 2 to 4% has been known to be most suitable (for example, refer to Japanese Unexamined Patent Publication (KOKAI) No. 57-126944) because it is required to have excellent thermal fatigue resistance. However, the present situation is as follows: almost no research has been done on the aluminium alloy having excellent thermal fatigue resistance; and it has not been known whether the above-mentioned alloy consisting essentially of Cu in an amount of 2 to 4% which was conventionally most suitable has excellent thermal fatigue resistance or not.

As a technique for improving thermal fatigue crack resistance of a cylinder head casting, there has been known TIG remelting treatment (M.Koyama, J.Miyake and K.Sakaguchi; SAE paper, No.891989,1989.). In this technique, after a critical part is melted by localized heating, a finely dispersed structure is obtained by quench solidifying and, at the same time, its porosity as a casting defect is reduced so that cracks caused by thermal fatigue is hard to be generated. By using this technique, the thermal fatigue resistance life could be improved to some extent.

However, recently, with a high pressure-charging of automobile engines, more extension of longevity has been demanded. Therefore, there arises a problem that more extension of longevity is hard to be obtained by only using this TIG remelting treatment method.

Furthermore, there has been suggested "aluminium alloy member" (Japanese Unexamined Patent Publication (KOKAI) No. 7-088645). In this publication, a high strength layer is formed, by building up bonding of Al-Cu alloy whose solid phase temperature line is higher than that of a cylinder head matrix, on a surface of a thermal stress concentration portion requiring thermal fatigue resistance in the matrix made of aluminium alloy. This aluminium alloy member is superior in thermal fatigue resistance, for strength is high at elevated temperature of Al-Cu alloy.

However, the above-mentioned aluminium alloy member disclosed in Japanese Unexamined Patent Publication (KOKAI) No. 7-088645 has the following problem: ductility at ordinary temperature of the Al-Cu alloy is low; and when it is heated, its ductility and toughness are further reduced as its precipitates become large-sized so that sufficient thermal fatigue resistance can not be exhibited.

Therefore, the present inventors have earnestly carried out the research and development in order to solve the problems of the related art described above and as the result of conducting a variety of systematic experiments in order to make clear the relationship between the structure of a material and thermal fatigue resistance, the present inventors have reached the present invention.

### SUMMARY OF THE INVENTION

It is an object of the present invention to provide an alloy having excellent thermal fatigue resistance.

It is another object of the present invention to provide an aluminum alloy having excellent thermal fatigue resistance.

It is the other object of the present invention to provide an aluminum alloy member having excellent thermal fatigue resistance.

### (First Invention)

The alloy having excellent thermal fatigue resistance of the present invention comprises: a metallic matrix; and heat resistant particles X which are dispersed in the matrix and whose breadth is not more than 20 µm and whose length is not more than 50 µm; wherein said heat resistant particles X are included in an amount of 5 to 25 vol% and precipitated particles which are unstable thermally are included in the matrix in an amount of not more than 1 wt%.

### (Second Invention)

The aluminium alloy having excellent thermal fatigue resistance of the present invention comprises: Si in an amount of 4 to 12 wt%; Cu in an amount of not more than 0.2wt%; Mg in an amount of not more than 0.2wt%; and the balance of aluminum and impurities.

### (Third Invention)

The aluminum alloy member of the present invention comprises: an improved thermal fatigue resistant portion formed by building up bonding of said alloy of the first invention or said alloy of the second invention on the surface of a heat distortion concentration portion of the matrix made of aluminum alloy.

### (First Invention)

The alloy of the present invention is superior in the thermal fatigue resistance.

### (Second Invention)

The aluminium alloy of the present invention is superior in the thermal fatigue resistance. Furthermore, it is superior in casting, its coefficient of thermal expansion is small, it is superior in structure stability and it is superior in workability.

### (Third Invention)

The aluminium alloy member of the present invention is superior in thermal fatigue resistance.

### BRIEF DESCRIPTION OF THE DRAWINGS

Figure 1 is a view for showing a preferred embodiment of an alloy having excellent thermal fatigue resistance of the present invention and is an explanatory view for showing typically a preferred distributed state of heat resistant particles X.

Figure 2 is a view for showing a preferred embodiment of an alloy having excellent thermal fatigue resistance of the present invention and is an explanatory view for showing typically another preferred distributed state of heat resistant particles X.

Figure 3 is an optical microscope photograph (magnification: 100) for showing a metallic structure of an aluminum alloy (specimen No. 1) formed in accordance with a First Preferred Embodiment of the present invention.

Figure 4 is an optical microscope photograph (magnification: 500) for showing a metallic structure of an aluminum alloy (specimen No. 1) formed in accordance with a First Preferred Embodiment of the present invention.

Figure 5 is an optical microscope photograph (magnification: 100) for showing a metallic structure of an aluminum alloy (specimen No. 6) formed in accordance with a First Preferred Embodiment of the present invention.

Figure 6 is an optical microscope photograph (magnification: 500) for showing a metallic structure of an aluminum alloy (specimen No. 6) formed in accordance with a First Preferred Embodiment of the present invention.

Figure 7 is an optical microscope photograph (magnification: 100) for showing a metallic structure of an aluminum alloy (specimen No. 9) formed in accordance with a First Preferred Embodiment of the present invention.

Figure 8 is an optical microscope photograph (magnification: 500) for showing a metallic structure of an aluminum alloy (specimen No. 9) formed in accordance with a First Preferred Embodiment of the present invention.

Figure 9 is a structural view showing a form of taking out a specimen.

### PREFERRED MODE FOR EMBODYING THE INVENTION

Inventions in which the above-mentioned inventions are furthermore embodied and preferred embodiments of these inventions will be explained as follows.

### (Viewpoint)

The present inventors noticed the following points for solving the above-mentioned problems of the related art. Namely, the present inventors analyzed a thermal fatigue phenomenon in detail, and in addition, they made clear the relationship between a structure and the thermal fatigue resistance of the material. Based on the view, they tried to find out measures for improving the thermal fatigue resistance. To be concrete, at first, based on the thermal fatigue test, they obtained a view that it is important to stabilize the structure, to improve its ductility and toughness, to level deformation, and to keep proof stress in order to improve the thermal fatigue resistance. Based on these views, the present inventors discovered the following ideas: (1) while reducing the thermally unstable precipitated particles in order to stabilize the structure, refining crystallized products in order to improve the ductility and toughness; (2) constituting a skeletal structure caused by the crystallized products or a uniformly dispersed structure in order to form the deformation uniformly; (3) conducting solid-solution strengthening or dispersed-strengthening of the matrix; and (4) in order to keep proof stress, while increasing heat resistant particles which are thermally stable and which forms the above-mentioned skeletal structure or the uniformly dispersed structure, constituting solid-solution strengthening or dispersed-strengthening of the matrix so that the thermal fatigue resistance thereof can be improved.

### [First Embodied Mode]

The alloy having excellent thermal fatigue resistance of the present invention comprises: a metallic matrix; and heat resistant particles X (first resistant particles) which are dispersed in said matrix and whose breadth is not more than 20 µm and whose length is not more than 50 µm; wherein said heat resistant particles X comprise thermodynamically stable particles (stable phase) or particles which are hard to become large-size even if they are heated at operating temperature; wherein said heat resistant particles are included in an amount of 5 to 25 vol%; and wherein precipitated particles which are unstable thermally, namely which are thermodynamically unstable particles (middle phase, semi-stable phase, GP zone) or and which become large-size if they are heated at operating temperature, are included in said matrix in an amount of not more than 1 wt%.

It has not been made clear about the mechanism in which the alloy having excellent thermal fatigue resistance of the present invention exhibits excellent effect, however, it may be considered as follows.

In the alloy of the present invention, heat resistant particles X whose breadth is not more than 20 µm and whose length is not more than 50 µm are existed in an amount of 5 to 25 vol%. Therefore, dispersed-strengthening effect is realized and the deformation of the alloy is generated uniformly.

Then, the dispersed-strengthening which is mentioned here means, at least, a gentle strengthening in which work hardening is slightly generated by suppressing the deformation thereof. In order to improve the thermal fatigue resistance, it is important to relieve the concentration of thermal distortion at a local portion, so that sufficient effect to the thermal fatigue resistance can be expected by the above-mentioned gentle strengthening which promotes the uniformity of the deformation.

If the breadth of the particle is more than 20 µm and if the length of the particle more than 50 µm, particles may be destroyed by stress concentration and this destruction brings about the whole destruction so that toughness thereof is reduced. However, if the shape of particles are long and narrow, destruction is conducted so as to cross the length thereof so that impact energy released at the time of destruction is small; therefore, there is little possibility of bringing about the whole destruction caused by the destruction of particles. Accordingly,the allowable dimension of the length is larger than that of the breadth. If the volume of the heat resistant particles is less than 5%, the dispersed-strengthening effect is small and if the volume of the heat resistant particles is larger than 25%, too much particles reduce the ductility thereof.

Also, in the alloy of the First embodied mode, precipitated particles being unstable thermally are included in said matrix in an amount of not more than 1wt%. The above-mentioned precipitated particles being unstable thermally are thermodynamically unstable particles (middle phase, semi-stable phase, GP zone, or the like), or particles which become large-size if they are heated at operating temperature. To be concrete, for example, there may be θ' phase in Al-Cu alloy or β' phase in Al-Mg alloy. Generally, the precipitated particles sometimes become large-size by over-aging, heated at a temperature being higher than an ageing temperature. This causes a volume change. The thermal fatigue is a phenomenon caused by a thermal distortion generated by a restraint of dimension change. The restraint is generated by a thermal expansion of the material. Under these restraints, if the precipitated particles become large-size, an outer shape thereof cannot change so that distortions are concentrated around the precipitated particles and this causes an internal stress. The generation of the internal stress in this way is considered to reduce the ductility and toughness of the matrix. Accordingly, if the precipitated particles being unstable thermally amount to not more than 1 wt%, it is possible to restrain that the precipitated particles become large-size and that the ductility and toughness of the matrix are reduced under the actual operating environment at which the alloy is heated at a high temperature. Then, no precipitated particles being unstable thermally are preferably existed: so the less, the better. However,actual alloys include impurity elements so that the precipitated particles are generated to the extent of 1 wt%, it has little affect to reduce the ductility and toughness of the matrix so that it may be allowed.

As mentioned above, the alloy of the present invention is considered to have excellent thermal fatigue resistance.

### [Preferred Embodied Mode of the First Embodied Mode]

### (Metallic Matrix)

The matrix of the alloy having excellent thermal fatigue resistance of the present invention comprises metallic matrix.

The matrix of the present invention is preferably solid-solution strengthening. Owing to this, it is preferable that the proof stress at the matrix portion is increased and the matrix portion is changed uniformly.

The matrix of the present invention is preferably dispersed-strengthened by the heat resistant particles Y ( second heat resistant particles) whose average particle diameter is not more than 1 µm. Owing to this, it is preferable that the proof stress of the matrix portion is increased and the matrix portion is changed uniformly. When the average diameter of the precipitated particle is larger than 1 µm, it is feared that the proof stress is not remarkably improved and that the ductility and toughness of the matrix is reduced.

The main portion of the alloy of the matrix in the present invention is preferably aluminum. Aluminum is light in weight and is excellent in thermal conductivity so that temperature slope thereof is hard to be generated: the effects of the present invention can be worked much more.

The matrix of the present invention preferably comprises Al as a main component and solute elements being at least one member selected from the group consisting of Ti, Zr and V. The total solute elements thereof is in an amount from 0.05 to 0.8 wt%. Owing to this,the matrix is solid-solution strengthened and the matrix portion is easy to be deformed uniformly. If the total amount of solute elements is less than 0.05 wt%, the solid-solution strengthening is not sufficient and there is a fear that local deformations may be generated. Furthermore, at the ordinary solidifying speed, it is hard to dissolve so as to exceed the amount of 0.8 wt%; if the solution elements amount is too much, it is feared that the ductility and toughness of the material may be reduced.

### (Heat Resistant Particle X)

The heat resistant particles X in the alloy having excellent thermal fatigue resistance of the present invention are dispersed in the above-mentioned metallic matrix; the breadth thereof is not more than 20 µm and the length thereof is not more than 50 µm;and they are included in an amount of 5 to 25 vol%. The heat resistant particles X comprise particles which are stable particles (stable phase) thermodynamically or which are hard to become large-size even if heated at the operating temperature.

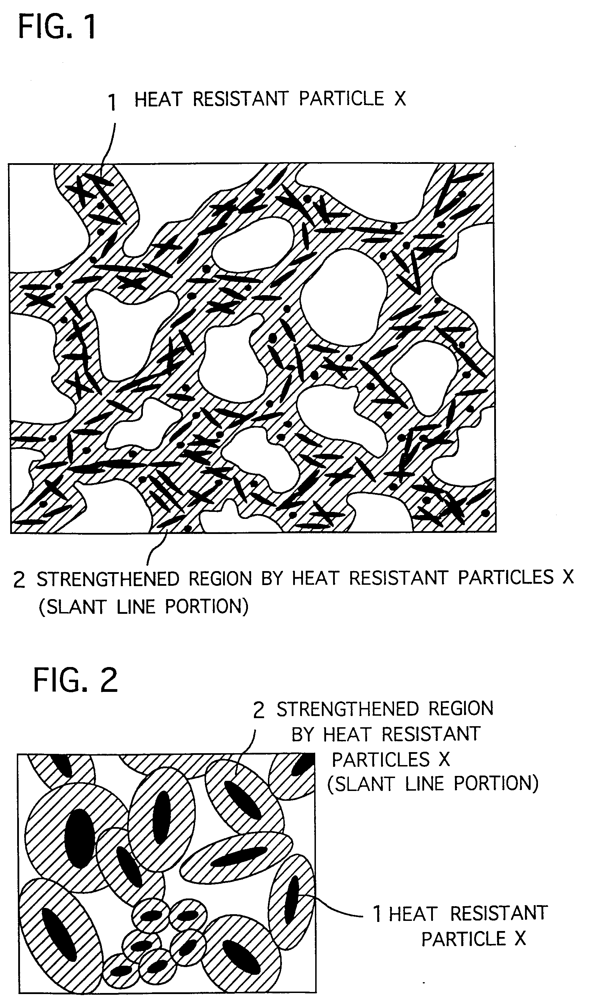

The heat resistant particles X of the present invention are preferably existed among spaces of dendrite arms. Because heat resistant particles X are existed among spaces of dendrite arms, a region strengthened by the heat resistant particles forms a skeletal structure in the state of net work as shown in Figure 1 so that the deformation is generated uniformly. However, when the heat resistant particles X are included in an amount from 15 to 25 vol%, the heat resistant particles X are not necessarily existed among spaces of dendrite arms, they may be dispersed uniformly. This is because when the rate of volume is high, average particle intervals are small even if they are dispersed uniformly. Thus, as shown in Figure 2, this causes strengthened regions in which the deformation is restrained by individual particles partially, so that the strengthened regions in the shape of net work can be formed with overlap as in the same way of Figure 1. The size of region, in which the deformation caused by the above-mentioned particles is restrained, depends on consistency and adhesion between particles and matrix; however, it is enough that the size thereof amounts to the extent of 15 to 25 vol%.

Here, the strengthening caused by this heat resistant particles X means, at least, a gentle strengthening in which a slight work hardening is generated by restraining the deformation. In order to improve thermal fatigue resistance, it is not necessary to improve proof stress remarkably, however, it is sufficient to have a gentle strengthening which promotes this kind of work hardening. Especially in the case of castings whose structure is rough, the strength at each portions varies so much, therefore, the strength at the weakest portion influences the whole strength thereof, so that it is considered to improve thermal fatigue resistance remarkably when the deformation may be generated uniformly and thermal distortion may be dispersed.

Also, the heat resistant particle of the present invention is preferably to be a metallic particle or an intermetallic compound particle. Owing to this, the heat resistant particle may be naturally crystallized in the process of solidification so that by using ordinary casting method or method of remelting locally the alloy can be produced at low cost.

Furthermore, in the present invention, ratio of [average length of the matrix crystal particle/average secondary dendrite arm space] is preferably to be 1 to 30. Owing to this, the above-mentioned skeletal structure in the shape of net work is easy to become isotropic and thereby the deformation is generated more uniformly. The ratio is generally not less than 1. Furthermore, if this ratio is more than 30, the isotropic property thereof is not sufficient and thereby it is feared that the deformation thereof is not generated uniformly.

### (Suitable Alloy)

The main component of the alloy comprises preferably aluminum, for it is light in weight and has excellent heat-conductivity so that temperature slope is hardly generated in aluminum. In this case, a heat resistance particle X is preferably at least one member selected from the group consisting of Si, Al-Fe-Si compound, Al-Fe-Mn-Si compound, Al-Ni compound, Al-Ti compound, Al-Zr compound and Al-Zr-V compound. These compounds can be naturally crystallized in the process of solidification of the aluminum alloy and these compounds are thermally stable particles so that they are suitable.

The alloy of the present invention, in the first embodied mode, preferably comprises: matrix being mainly composed of Al; and a heat resistance particle X being preferably at least one member selected from the group consisting of Si, Al-Fe-Si compound, Al-Fe-Mn-Si compound, Al-Mn compound, Al-Mn-Si compound, Al-Ni compound, Al-Ti compound, Al-Zr compound and Al-Zr-V compound. Owing to this, the present alloy is light in weight and there is hardly generated the temperature slope causing thermal distortion in the present alloy; and the heat resistant particle is thermally stable and these compounds may be naturally crystallized by conducting the solidification of the aluminum alloy.

Furthermore, the alloy of the present invention, in the first embodied mode, preferably comprises Si in an amount of 4 to 12 wt%; Cu in an amount of not more than 0.2 wt% as an impurity; Mg in an amount of not more than 0.2 wt% as an impurity; and the balance of aluminum and impurities. Owing to this, it can be possible to obtain the alloy which is excellent in castability, whose coefficient of thermal expansion is small, which is excellent in workability and in which little amount of thermally unstable precipitated particles are generated.

Moreover, the alloy of the present invention, in the first embodied mode, preferably comprises: Si in an amount of 4 to 12 wt%; Cu in an amount of not more than 0.2 wt% as an impurity; Mg in an amount of not more than 0.2 wt% as an impurity; furthermore, at least one member selected from the group consisting of Ti in an amount of 0.05 to 1.0 wt%, Zr in an amount of 0.05 to 1.0 wt% and V in an amount of 0.05 to 1.0 wt%; and the balance of aluminum and impurities. Owing to this, it can be possible to obtain the alloy which is excellent in castability, whose coefficient of thermal expansion is small, and in which little amount of thermally unstable precipitated particles are generated, and furthermore, solid-solution strengthening of the matrix is conducted by Ti, Zr and V. And also, the addition of Ti, Zr V and so on brings about the facts that crystal grain is refined, and the skeletal structure composed of crystallized products become isotropic so that deformation can be generated more uniformly.

Moreover, the alloy of the present invention, in the first embodied mode, preferably comprises: Si in an amount of 4 to 12 wt%; Cu in an amount of not more than 0.2 wt% as an impurity; Mg in an amount of not more than 0.2 wt% as an impurity; furthermore, at least one member selected from the group consisting of Ti in an amount of 0.05 to 1.0 wt%, Zr in an amount of 0.05 to 1.0 wt%, and V in an amount of 0.05 to 1.0 wt%;furthermore, at least one member selected from the group consisting of Fe in an amount of 0.15 to 1.5 wt%, Mn in an amount of 0.15 to 1.5 wt% and Ni in an amount of 0.25 to 3 wt%; and the balance of aluminum and impurities. Owing to this, it can be possible to obtain the alloy which is excellent in castability, whose coefficient of thermal expansion is small, and in which little amount of thermally unstable precipitated particles are generated, and furthermore, solid-solution strengthening of the matrix is conducted by Ti, Zr and V. And also, the addition of Ti, Zr V and so on brings about the facts that crystal grain is refined, the skeletal structure composed of crystallized product becomes isotropic so that deformation can be generated more uniformly. Furthermore, the addition of Fe, Mn and Ni strengthens the skeletal structure composed of heat resistant particles X so that the proof stress is improved, the deformation becomes uniform and thermal fatigue resistance thereof is more improved.

Furthermore, the alloy of the present invention, in the first embodied mode, preferably comprises the secondary dendrite arm space being not more than 25 µm and the amount of porosity being not more than 0.2cc/100g. Owing to this, the structure thereof is refined and thereby ductility and toughness thereof are improved and furthermore, concentration of distortion generated at the periphery portions of porosity is suppressed, so that thermal fatigue resistance thereof is improved.

### [Second Embodied Mode]

The aluminum alloy having excellent thermal fatigue resistance of the present invention comprises: Si in an amount of 4 to 12 wt%; Cu in an amount of not more than 0.2 wt% as an impurity; Mg in an amount of not more than 0.2 wt% as an impurity; and the balance of aluminum and impurities.

The mechanism in which the aluminum alloy having excellent thermal fatigue resistance of the present invention has not been made clear yet, however, it may be considered as follows.

The aluminum alloy having excellent thermal fatigue resistance of the present invention comprises: Si in an amount of 4 to 12 wt%; Cu in an amount of not more than 0.2 wt% as an impurity; Mg in an amount of not more than 0.2 wt% as an impurity; and the balance of aluminum and impurities.
(1) Si is contained in an amount of 4 to 12 wt%. This Si is an essential element which improves castability of the aluminum alloy. If Si is included less than 4 wt%, castability there of is inferior so that casting defect is easy to be generated, and furthermore, it arises a problem that the coefficient of thermal expansion is large. If Si exceeds 12 wt%, large-size primary crystals Si are easy to be crystallized, and consequently there arises a problem that ductility and toughness are reduced. Then the content amount of Si preferably amounts to the extent of 6 to 12 wt%. If Si is included in the amount of 6 to 12 wt%, castability, strength and the coefficient of thermal expansion are suitable. Furthermore, the preferable content amount of Si ranges from 9 to 12 wt%.
(2) Cu is contained in an amount of not more than 0.2 wt%. This Cu generates precipitates which are thermally unstable. If Cu is included more than 0.2 wt%, there arises a lot amount of precipitates which are thermally unstable, these precipitates become large-size at the time of using so that it is feared ductility and toughness are reduced. Thus, Cu preferably amounts to not more than 0.1 wt%, and most preferably 0 wt%.
(3) Mg is contained in an amount of not more than 0.2 wt%. It is feared that Mg, as in the same way of Cu, generates precipitates which are thermally unstable. If Mg is included more than 0.2 wt%, there arises a lot amount of precipitates which are thermally unstable, these precipitates become large-size at the time of using so that it is feared ductility and toughness are reduced. Thus, Mg preferably amounts to not more than 0.1 wt%, and most preferably 0 wt%.

The aluminum alloy of the present invention can realize the aluminum alloy having excellent thermal fatigue resistance, because the amount of Si, Cu and Mg are set to be within the above-mentioned extents.

### [Preferred Embodied Mode of the Second Preferred Mode]

The aluminum alloy of the second preferred mode of the present invention preferably comprises at least one member selected from the group consisting of Ti in an amount of 0.05 to 1.0 wt%, Zr in an amount of 0.05 to 1.0 wt%, and V in an amount of 0.05 to 1.0 wt%. By adding these elements, crystallized particles of the aluminum alloy can be refined and thereby the net work of crystallized products can be isotropic. Also, the solid-solution of these elements is generated in the matrix and this contributes to improve proof stress and thereby to make deformation uniform. If the addition amount of each of these elements is less than 0.05 wt%, sufficient effect of solid-solution strengthening or crystal grain refining can not be obtained; and if the addition amount of each of these elements exceeds the maximum amount, large-size crystallized products are generated so that it is feared that ductility and toughness may be reduced. Moreover, if combined addition of these elements are conducted to the extent so as not to generate the large-size crystallized products, the solid-solution strengthening is furthermore improved and it is suitable. Then,under the ordinary solidification conditions, the preferable addition is more than one member selected from the group consisting of Ti in an amount of 0.05 to 0.4 wt%, Zr in an amount of 0.05 to 0.5 wt%, and V in an amount of 0.05 to 0.5 wt%. The combined addition of Ti in an amount of 0.1 to 0.2 wt%, Zr in an amount of 0.1 to 0.2 wt%, and V in an amount of 0.1 to 0.2 wt% is optimum.

The aluminum alloy of the Second Preferred Mode of the present invention preferably comprises at least one member selected from the group consisting of Fe in an amount of 0.15 to 1.5 wt%, Mn in an amount of 0.15 to 1.5 wt%, and Ni in an amount of 0.25 to 3 wt%. By adding these elements, crystallized products having excellent heat resistance are generated and the net work of crystallized products can be isotropic so that deformation can be uniform and proof stress is improved. If the addition amount of each of these elements is less than the designated amount, sufficient effect is not obtained; and if the addition amount of each of these elements exceeds the designated amount, large-size crystallized products are generated so that it is feared that ductility and toughness may be reduced. Then, under the ordinary solidification conditions, the preferable extent is more than one member selected from the group consisting of Fe in an amount of 0.3 to 1.0 wt%, Mn in an amount of 0.3 to 1.0 wt%, and Ni in an amount of 0.5 to 2 wt%. Moreover, if combined addition of these elements are conducted to the extent so as not to generate the large-size crystallized products, the above-mentioned effects are further improved and it is suitable. The combined addition of Fe in an amount of 0.4 to 0.7 wt%, Mn in an amount of 0.4 to 0.7 wt%, and Ni in an amount of 0.7 to 1.5 wt% is optimum.

In the aluminum alloy of the second preferred mode of the present invention, the secondary dendrite arm space is preferably not more than 25 µm. In the case of large casting, ordinary, solidification time is long and thereby the structure thereof is rough; however, if remelting and building up are conducted locally, it is possible to refine partially the structure thereof. If the secondary dendrite arm space which corresponds to the solidification time is not more than 25 µm, the crystallized products are refined enough and ductility and toughness thereof is improved. If it exceeds 25 µm, ductility and toughness thereof is not so improved. It is preferably that the secondary dendrite arm space is refined to amount to not more than 20 µm, and it is optimum that the space thereof is not more than 15 µm.

In the aluminum alloy of the second preferred embodiment of the present invention, it preferable that the porosity amount is not more than 0.2cc/100g per 100g in weight. If the porosity is existed more than 0.2cc/100g, the deformation is concentrated around the porosity so that it is feared that thermal fatigue resistance thereof is remarkably reduced. Thus, the porosity amount is preferable not more than 1cc/100g and it is optimum to be 0cc/100g.

In response to necessity, improvement treatments of eutectic Si and primary crystal Si may be conducted in the aluminum alloy in the second preferred embodied mode of the present invention.

### [Third Embodied Mode]

The aluminum alloy member of the present invention forms, on the surface of a heat distortion concentration portion of the matrix made of aluminum alloy, an improved thermal fatigue resistant portion which is formed by building up bonding. The bonding is at least one alloy selected from the group consisting of said alloy of said first or second invention; said alloy of said first embodied mode and preferable embodied mode thereof; and said alloy of said second embodied mode and preferable embodied mode thereof.

The mechanism in which the aluminum alloy having excellent thermal fatigue resistance of the present invention has not been made clear yet, however, it may be considered as follows.

The aluminum alloy member of the third embodied mode of the present invention forms, on the surface of a heat distortion concentration portion of the matrix made of aluminum alloy, an improved thermal fatigue resistant portion which is formed by building up bonding. The bonding is at least one alloy selected from the group consisting of said alloy of said first or second invention; said alloy of said first embodied mode and preferable embodied mode thereof; and said alloy of said second embodied mode and preferable embodied mode thereof. Consequently, the matrix and the building up member can be constituted by different kinds of alloys in response to the necessary characteristics, therefore, optimum alloy member having total characteristics can be obtained.

In the case when said matrix is cylinder head for requiring high strength, the above-mentioned alloy is slightly inferior in strength. For solving this, only a valve bridge portion or a portion between a sub combustion chamber hole and a valve hole may be improved; by building up bonding of at least one alloy selected from the group consisting of said alloy of said first or second invention, said alloy of said first embodied mode and preferable embodied mode thereof, and said alloy of said second embodied mode and preferable embodied mode thereof. Consequently, this improvement brings cylinder head alloy members which are excellent in total characteristics.

Even if the matrix component is mixed into the building up layer, when the content amount of Cu in the building up layer is not more than 3 wt% and the ratio of [average length/secondary dendrite arm] is in the range of 1 to 30, it does not affect the total characteristics so much.

### [Fourth Embodied Mode]

This mode process for producing the alloy of the present invention is a process for producing an alloy having excellent thermal fatigue resistance. This mode process comprises: (1) a step of producing an alloy (or said alloy) of at least one alloy selected from the group consisting of said alloy of said first or second invention, said alloy of said first embodied mode and preferable embodied mode thereof, and said alloy of said second embodied mode and preferable embodied mode thereof; and afterward, (2) a step of conducting heat treatment to said alloy. Owing to this, the strength, ductility and toughness of the alloy can be furthermore optimized. Then the heat treatment may be at least one of ordinary T6 treatment, T7 treatment, T5 treatment and T4 treatment. Therefore, corners of crystallized products become round so that ductility is improved, resultant homogeneity can prevent brittleness at grain boundaries, and moreover age hardening of the matrix is conductable.

### [Fifth Embodied Mode]

This mode process for producing the alloy of the present invention is a process for producing an alloy having excellent thermal fatigue resistance. This mode process comprises the steps of: (1) a step of producing the aluminum alloy member of said third invention (or said alloy member); and afterward, (2) a step of conducting heat treatment to said alloy. Owing to this, the strength, ductility and toughness of the aluminum alloy member can be furthermore optimized. Then the heat treatment may be at least one of ordinary T6 treatment, T7 treatment, T5 treatment and T4 treatment. Therefore, corners of crystallized product become round so that ductility is improved, resultant homogeneity can prevent brittleness at grain boundaries, and moreover age hardening of the matrix is conductable.

The present invention may be adopted the following expressions.
1. The alloy having excellent thermal fatigue resistance comprising: a metallic matrix; and heat resistant particles X which are dispersed in said matrix and whose breadth is not more than 20 µm and whose length is not more than 50 µm; wherein said heat resistant particles X are included in an amount of 5 to 25 vol%.
2. The alloy having excellent thermal fatigue resistance comprising: a metallic matrix; and heat resistant particles X which are dispersed in said matrix and whose breadth is not more than 20 µm and whose length is not more than 50 µm; wherein said heat resistant particles X are included in an amount of 5 to 25 vol%, and wherein precipitated particles which are unstable thermally are included in said matrix in an amount of not more than 1 wt%.
3. The alloy having excellent thermal fatigue resistance according to said 1 or 2, wherein said matrix is solid-solution strengthened; or strengthened by the dispersed heat resistant particles Y whose average particle diameter is not more than 1 µm.
4. The alloy having excellent thermal fatigue resistance according to one of said 1 to 3, wherein said heat resistant particles X are existed in the internal spaces between the dendrite arms of the metallic matrix.
5. The alloy having excellent thermal fatigue resistance according to one of said 1 to 4, wherein the content of said heat resistant particles X is in the range of 15 to 25 vol%.
6. The alloy having excellent thermal fatigue resistance according to said 5, wherein said heat resistance particles X are uniformly dispersed in the metallic matrix.
7. The alloy having excellent thermal fatigue resistance according to one of said 1 to 6, wherein the strengthened region by said heat resistance particles X has a structure in the shape of net work of said heat resistant particles X.
8. The alloy having excellent thermal fatigue resistance according to one of said 1 to 7, wherein the ratio of [average length of the matrix crystal grain/secondary dendrite arm space] is in the range of 1 to 30.
9. The alloy having excellent thermal fatigue resistance according to one of said 1 to 8, wherein the internal space of the secondary dendrite arm is not more than 25 µm.
10. The alloy having excellent thermal fatigue resistance according to one of said 1 to 9, wherein porosity amount is not more than 0.2cc/100g.
11. The alloy having excellent thermal fatigue resistance according to one of said 1 to 10, wherein said heat resistant particle X is a metallic particle or intermetallic compound particle.
12. The alloy having excellent thermal fatigue resistance according to one of said 1 to 11, wherein said metallic matrix is an alloy which is mainly composed of Al.
13. The alloy having excellent thermal fatigue resistance according to one of said 1 to 12, wherein said heat resistant particle X is at least one member selected from the group consisting of Si, Al-Fe-Si compound, Al-Fe-Mn-Si compound, Al-Mn compound, Al-Mn-Si compound, Al-Ni compound, Al-Ti compound, Al-Zr compound and Al-Zr-V compound.
14. The alloy having excellent thermal fatigue resistance according to said 12 or 13, characterized in that: the solute element is at least one member selected from the group consisting of Ti, Zr and V; and the solid-solution thereof is conducted in a total amount of 0.05 to 0.8 wt% in said matrix.
15. The aluminum alloy having excellent thermal fatigue resistance comprises Si in an amount of 4 to 12 wt% and the balance of Al and impurities.
16. The aluminum alloy having excellent thermal fatigue resistance according to one of said 1 to 14 comprising Si in an amount of 4 to 12 wt% and the balance of Al and impurities.
17. The aluminum alloy having excellent thermal fatigue resistance according to said 15 or 16, wherein as an impurity, Cu amounts to not more than 0.2 wt%; and as an impurity, Mg amounts to not more than 0.2 wt%.
18. The aluminum alloy having excellent thermal fatigue resistance according to said 15 or 16, wherein as an impurity, Cu amount to not more than 0.1 wt%; and an impurity, Mg amounts to not more than 0.1 wt%.
19. The aluminum alloy having excellent thermal fatigue resistance according to one of said 15 to 18, is characterized in that it comprises at least one member selected from the group comprising Ti in an amount of 0.05 to 1 wt%, Zr in an amount of 0.05 to 1 wt%, and V in an amount of 0.05 to 1 wt%.
20. The aluminum alloy having excellent thermal fatigue resistance according to one of said 15 to 19, is characterized in that it comprises Ti in an amount of 0.05 to 1 wt%, and Zr in an amount of 0.05 to 1 wt%.
21. The aluminum alloy having excellent thermal fatigue resistance according to one of said 15 to 20, is characterized in that it comprises Ti in an amount of 0.05 to 1 wt%, Zr in an amount of 0.05 to 1 wt%, and V in an amount of 0.05 to 1 wt%.
22. The aluminum alloy having excellent thermal fatigue resistance according to one of said 15 to 21, is characterized in that there exists no heat resistant particles whose length is not less than 50 µm.
23. The aluminum alloy having excellent thermal fatigue resistance according to one of said 15 to 22, is characterized in that there exists no Al-Ti compound, no Al-Zr compound, no Al-Zr-V compound and no Al-V compound whose length is not less than 50 µm respectively.
24. The alloy having excellent thermal fatigue resistance according to one of said 15 to 23, characterized in that the total amount of solute element selected from the group consisting of Ti, Zr and V and the solution thereof is conducted in the amount of 0.05 to 0.8 wt% in said matrix.
25. The aluminum alloy having excellent thermal fatigue resistance according to one of said 15 to 24, characterized in that it comprises at least one member selected from the group consisting of Fe in an amount of 0.15 to 1.5 wt%, Mn in an amount of 0.15 to 1.5 wt%, and Ni in an amount of 0.25 to 3 wt%.
26. The aluminum alloy having excellent thermal fatigue resistance according to one of said 15 to 25, characterized in that it comprises at least one member selected from the group consisting of Fe in an amount of 0.3 to 1.5 wt%, Mn in an amount of 0.3 to 1.5 wt%, and Ni in an amount of 0.5 to 3 wt%.
27. The aluminum alloy having excellent thermal fatigue resistance according to one of said 15 to 26, characterized in that (Fe+Mn) is not more than 1.5 wt%.
28. The aluminum alloy having excellent thermal fatigue resistance according to one of said 15 to 27, is characterized in that there exists no Al-Fe compound, no Al-Fe-Si compound, no Al-Fe-Mn-Si compound, no Al-Mn compound and no Al-Mn-Si compound whose length is not less than 50 µm respectively.
29. The aluminum alloy having excellent thermal fatigue resistance according to one of said 15 to 28, is characterized in that it comprises Fe in an amount of 0.15 to 1.5 wt%, and Mn in an amount of 0.15 to 1.5 wt%.
30. The aluminum alloy having excellent thermal fatigue resistance according to one of said 15 to 29, is characterized in that it comprises Fe in an amount of 0.3 to 1.5 wt%, and Mn in an amount of 0.3 to 1.5 wt%.
31. The aluminum alloy having excellent thermal fatigue resistance according to one of said 15 to 30, is characterized in that it comprises Ni in an amount of 0.25 to 3 wt%.
32. The aluminum alloy having excellent thermal fatigue resistance according to one of said 15 to 31, is characterized in that it comprises Ni in an amount of 0.5 to 3 wt%.
33. The aluminum alloy having excellent thermal fatigue resistance according to one of said 15 to 32, is characterized in that there exists no Al-Ni compound and no Al-Fe-Ni compound whose length is not less than 50 µm respectively.
34. The aluminum alloy having excellent thermal fatigue resistance according to one of said 15 or 33, is characterized in that (Fe+Mn+Ni) is not more than 3 wt%.
35. The alloy having excellent thermal fatigue resistance according to one of said 15 or 34, is characterized in that the ratio of [average length of the matrix crystal grain/secondary dendrite arm space] is in the range of 1 to 30.
36. The alloy having excellent thermal fatigue resistance according to one of said 15 to 35, is characterized in that the secondary dendrite arm space is not more than 25 µm.
37. The alloy having excellent thermal fatigue resistance according to one of said 15 to 36, is characterized in that porosity amount is not more than 0.2cc/100g.
38. The aluminum alloy member having excellent thermal fatigue resistance is characterized in that an improved thermal fatigue resistant portion is formed by building up bonding of the alloy according to one of said 1 to 37 on the surface of a heat distortion concentration portion of the matrix made of aluminum alloy.
39. The aluminum alloy member having excellent thermal fatigue resistance is characterized in that an improved thermal fatigue resistant portion is formed by building up bonding of the alloy according to one of said 1 to 37 on the surface of a heat distortion concentration portion of the cylinder head made of aluminum alloy.
40. The cylinder head alloy member having excellent thermal fatigue resistance according to the above-mentioned 39, wherein said heat distortion concentration portion is a valve bridge portion or a portion between a sub-combustion chamber hole and a valve hole.
41. The cylinder head alloy member or aluminum alloy member having excellent thermal fatigue resistance according to one of said 38 to 40, is characterized in that Cu is included in the amount of not more than 3 wt%; and the ratio of [average length of the matrix grain particle /secondary dendrite arm space] is in the range of 1 to 30.
42. The cylinder head alloy member having excellent thermal fatigue resistance according to one of said 41, is characterized in that it comprises Si in an amount of 4 to 12 wt%; as an impurity, Mg in an amount of more than 0.2 wt%; and furthermore, at least one member selected from the group consisting of Ti in an amount of 0.05 to 1.0 wt%, Zr in an amount of 0.05 to 1.0 wt%, and V in an amount of 0.05 to 1.0 wt%.
43. The alloy having excellent thermal fatigue resistance and the process for producing the same according to one of said 1 to 37, is characterized in that it comprises the steps of: a step of producing the aluminum alloy defined as one of said 1 to 37; and afterwards, a step of conducting heat treatment with respect to the aluminum alloy.
44. The aluminum alloy member having excellent thermal fatigue resistance and the process for producing the same according to one of said 38 to 42, is characterized in that it comprises the steps of: a step of producing the aluminum alloy defined as one of said 38 to 42; and afterwards, a step of conducting heat treatment.
45. The alloy, the aluminum alloy and the process for producing the same according to said 41 or 42, is characterized in that said heat treatment is at least one treatment selected from the group consisting of T7, T6, T5 and T4.
46. The above-mentioned alloy having excellent thermal fatigue resistance, aluminum alloy having excellent thermal fatigue resistance or building up layer which is built up on the cylinder head for a gasoline engine or a diesel engine.

Furthermore, the above-mentioned 1 to 46 may be suitably combined.

### (Preferred Embodiment)

The Preferred Embodiments of the present invention will be explained as follows.

### (First Preferred Embodiment)

In order to achieve the target composition, 99.9 wt% pure aluminum ground metal and various kinds of matrix alloy were blended and dissolved; and a skimming treatment of adding flux (NaCl + 25 wt% AlF3) in the amount of 0.3 wt% was conducted. Then, after conducting vacuum degassing treatment of heating at about 10 Pa for 20 min, casting was conducted into a copper die, a Lanzule die, which is often used at the sampling for gas analysis, so that the aluminum alloy material of the First Preferred Embodiment in the present invention was produced. (specimen number: 1 to 9) At this time, dissolving and various treatments were conducted at the temperature of 750 °C and a treatment of pouring was conducted at the temperature of 700 °C. The secondary dendrite arm space at the position of sampling was about 12 µm and the porosity amount was not more than 0.1cc/100g.

The blending composition of obtained aluminum alloy specimens are shown in Table 1. The amount of other impurities was not more than 0.1 wt%. It was confirmed that these amounts of blending composition are almost same as those of casting composition by IPC luminous analysis.

**TALE 1**

| SPECIMEN No. | | BLENDING COMPOSITION wt% |
|---|---|---|
| FIRST PREFERRED EMBODIMENT | 1 | Al-6Si |
| | 2 | Al-6Si-0.2Ti |
| | 3 | Al-6Si-0.2Zr |
| | 4 | Al-6Si-0.1Zr-0.1V |
| | 5 | Al-6Si-0.2Ti-0.1Zr-0.1V |
| | 6 | Al-6Si-0.5Fe-0.5Mn-0.2Ti-0.1Zr-0.1V |
| | 7 | Al-6Si-1Ni-0.5Mn-0.2Ti-0.1Zr-0.1V |
| | 8 | Al-8Si-0.5Fe-0.5Mn-0.2Ti-0.1Zr-0.1V |
| | 9 | Al-12Si-0.5Fe-0.5Mn-0.2Ti-0.1Zr-0.1V |
| COMPARATIVE EXAMPLES | C1 | Al-6Si-3.5Cu-0.3Mg-0.4Fe-0.3Mn |
| | C2 | PURE Al (PURITY 99.9%) |
| | C3 | A2319(Al-6Cu-0.3Mn-0.13Ti-0.1Zr-0.15 V ) |

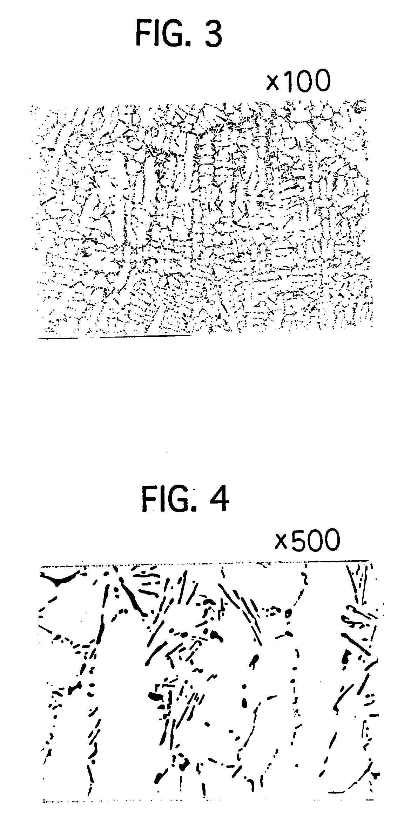

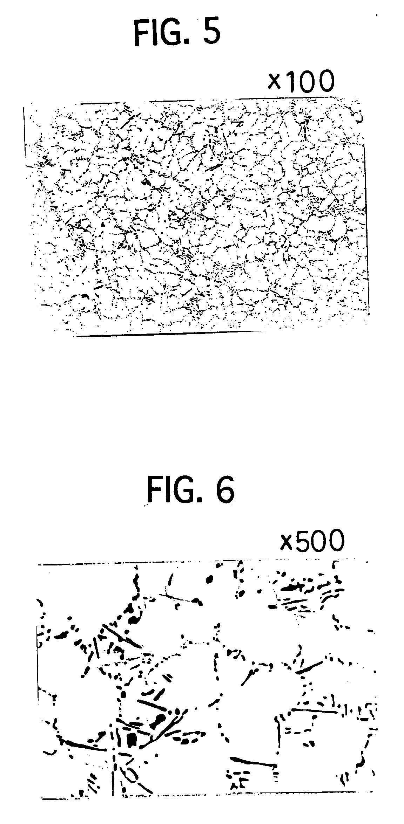

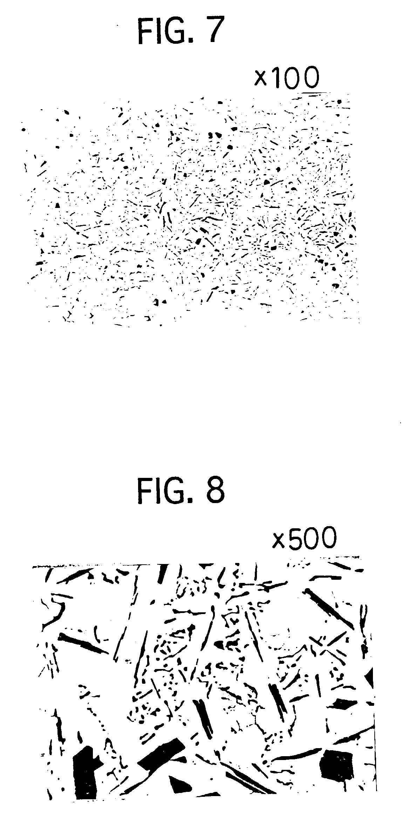

The metallographic structures of the cross sections of the aluminum alloy of specimen Nos. 1, 6 and 9 were observed by using an optical microscope (magnification 100 and 500). The results are shown as follows: Figure 3 is an optical microscope photograph of magnification 100 of the specimen No. 1; Figure 4 is an optical microscope photograph of magnification 500 of the specimen No. 1; Figure 5 is an optical microscope photograph of magnification 100 of the specimen No. 6; Figure 6 is an optical microscope photograph of magnification 500 of the specimen No. 6; Figure 7 is an optical microscope photograph of magnification 100 of the specimen No. 9; and Figure 8 is an optical microscope photograph of magnification 500 of the specimen No.9, respectively. The sizes of heat resistant particles X are follows: in the specimen No. 1, the breadth thereof is not more than 4 µm and the length thereof is not more than 20 µm; in the specimen No. 6, the breadth thereof is not more than 4 µm and the length thereof is 30 µm; and in the specimen No.5, the breadth thereof is not more than 15 µm and the length thereof is not more than 30 µm. Table 2 shows the amounts of containing heat resistant particles X which were obtained by picture processing from these structure photographs.

**TABLE 2**

| SPECIMEN No. | | BREAKAGE LIFE DURATION (CYCLE) | IRREGULARITY STATE OF SURFACE | AMOUNT OF HEAT RESISTANT PARTICLES X |
|---|---|---|---|---|
| FIRST PREFERRED EMBODIMENT | 1 | 4000 | large-size | 10 |
| | 2 | 5670 | fine | 10 |
| | 3 | 5500 | fine | 10 |
| | 4 | 4600 | fine | 10 |
| | 5 | not less than 5000 | finer than those of specimens 2,3 and 4 | 10 |
| | 6 | 5510 | finer than that of specimen 5 | 12 |
| | 7 | not less than 6000 | finer than that of specimen 6 | 12 |
| | 8 | not less than 6000 | finer than that of specimen 6 | 16 |
| | 9 | not less than 6000 | finer than that of specimen 8 | 22 |
| COMPARATIVE EXAMPLES | C1 | 1470 | large-size | 15 |
| | C2 | 700 | very large-size | not more than 1 |
| | C3 | 800 | small | ― |

As is clear from TABLE 2,the amounts of including heat resistant particles in the specimen Nos. 1 to 9 range from 10 to 22 vol% and they increase in response to the additions of Fe, Mn and Ni and increase of Si. Furthermore,it was confirmed that this heat resistant particles X , in the case of specimen Nos. 1 to 8, exist among dendrite spaces and consequently they forms a skeletal structure in the shape of net work which is typically shown in Figure 1. In the specimen No.1, there is found a portion in which dendrite cells are aligned; however, in the case of specimen Nos.2 to 9, as shown in Figure 4, there is found almost no alignment of dendrite cells and there is found a net work shaped structure which is isotropic. On the other hand, in the case of specimen No. 9 which is close to a eutectic structure, a remarkable net work structure isn't obtained, the heat resistant particles X are dispersed almost uniformly. However, in this case, the amount of containing heat resistant particles X amounts to 22 vol%, which is a large amount, so that spaces among particles become narrow and as is typically shown in Figure 2, reinforced area by individual particle overlaps so that the reinforced area in the shape of net work is formed.

By EPMA analysis, it was found that a large amount of Ti, Zr and V added in specimen Nos. 2 to 9 was dissolved in the matrix.

For the comparison, Al alloy specimen material for comparison whose blending are other than the composition of the present invention were obtained.

### (Comparative Example 1)

The Al alloy specimen for comparison whose blending composition corresponds to JIS-AC2B was obtained (specimen No.C1). The production method was the same as that of the above-mentioned preferred embodiment.

### (Comparative Example 2)

The specimen was produced by dissolving 99.9% pure aluminum ground metal only (specimen No.C2). The production method, other than blending thereof, was the same as that of the above-mentioned preferred embodiment.

All of the blending compositions of these specimens for comparison are shown in TABLE 1. The secondary dendrite arm space at the position of picking up specimens was about 12 µm and the porosity amount was not more than 0.1cc/100g.

### (Comparative Example 3)

The alloy which corresponds to the Al-Cu alloy disclosed in Japanese Unexamined Patent Publication (KOKAI) No.7-088645 was produced in the same method of the above-mentioned First Preferred Embodiment (Specimen No.C3). All of the blending compositions of these specimens for comparison are shown in TABLE 1. The porosity count of said alloy was not more than 0.1cc/100g.

### (Performance Evaluation Test)

Then, T6 treatment (solution treatment: 500°C X 2 hours → water cooling, aging treatment: 160 °C X 5 hours) was conducted on the obtained Al alloy specimens and the Al alloy specimens for comparison. Thereafter, the specimens were produced and thermal fatigue test was conducted.

The thermal fatigue test was conducted by the system of repeating of heating and cooling by integrating a constraint holder having a low heat expansion and each specimen. This system is disclosed in: for example, ① Japanese Unexamined Patent Publication (KOKAI) No. 7-20031 [Japanese Patent Application (SHUTSUGAN) No. 5-188818]; ② 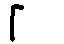 Material 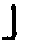 ,vol.45,(1996),pp.125-130; ③ thermal fatigue test method disclosed in 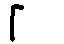 Light Metal 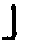 , vol.45,(1995),pp671-676). The range of the test temperature was from 40 to 260 °C, and the repeating speed was set to be 5 min/cycle. By using a specimen made of JIS-AC2B alloy, according to the thermal fatigue test method disclosed in the above-mentioned ②, the total strain range of an initial stage of the test which is actually measured by a high temperature strain gauge was about 0.6%. A medium pattern disclosed in the above-mentioned ② and ③ was used as a specimen and a holder.

The thermal fatigue breakage life duration was defined as a cycle number in which a crack on the surface of the specimen begins to develop rapidly.

The results of the First Preferred Embodiment and the Comparative Examples are shown in TABLE 2. This thermal fatigue test result shows the irregularity states of the surfaces of the specimens which completed the test.

Based on this result, it is thought the longer the breakage life duration is, and moreover, the finer the irregularity is; the more improved thermal fatigue resistance is obtained.

As is clear from TABLE 2, the specimen No. 1 which includes Si in the amount of 6% has longer breakage life duration, as compared with the specimen C2 which does not include Si.

Moreover, the specimen Nos. 1 to 9 which do not include Cu and Mg have remarkably longer life duration, as compared with the specimen NO. C1 which includes Cu and Mn. Among specimen Nos. 1 to 9, specimen Nos.2 to 5 including Ti, Zr and V have longer life duration and the irregularity of the surface thereof is finer, as compared with the specimen No. 1 which does not include Ti, Zr and V. Among them, especially, the irregularity of the specimen No. 5 in which Ti, Zr and V are compositely added is furthermore finer, as compared with the specimen Nos. 2 to 4 in which they are added individually.

Moreover, the specimen Nos. 6 to 9, in which Fe, Mn and Ni are added in addition to Ti, Zr and V, have furthermore finer irregularities of the surfaces thereof. Also, the specimen No. 7 in which Ni is added has finer irregularity of the surface thereof, as compared with the specimen No. 6 in which Ni is not added.

The specimen Nos. 6 , 8 and 9 in which only the amount of Si varies from 6 to 12 wt%, as is clear from the description of TABLE 2, have remarkably finer irregularities of each of the surfaces thereof. However, among them, the following tendency was found: the more Si is added to the alloy, the more finer the irregularity of the surface thereof is obtained.

As a result, as an aluminum alloy having excellent thermal fatigue resistance, it is considered to be preferable that the alloy includes Cu and Mg in the amount which is as small as possible ; Si in the amount of 6 to 12 wt%; at least one member selected from the group consisting of Ti, Zr and V in an amount of 0.1 to 0.2 wt%; and at least one member selected from the group consisting of Fe, Mn and Ni.

Moreover, it is considered that the alloys of the specimen Nos. 1 to 9 have excellent heat resistance for the following reasons: (1) in order to attain the stability of the structure, improvement of ductility and toughness, uniformity of the deformation, and the maintenance of proof stress, precipitated particles being unstable thermally are reduced in the matrix; (2) the reinforced region, caused by fine heat resistant particles in the appropriate amount which does not inhibits ductility, forms a skeletal structure in the shape of net work; (3) improvement of proof stress and uniformity of the deformation of the matrix portion are conducted by solid-solution strengthening. Accordingly, not only the alloys having the compositions exemplified in the specimen Nos. 1 to 9, but also the alloys having the constitution of the present invention and the characteristics of the constitution of the preferred embodied mode are considered to have excellent thermal fatigue resistance.

### (Test Examples)

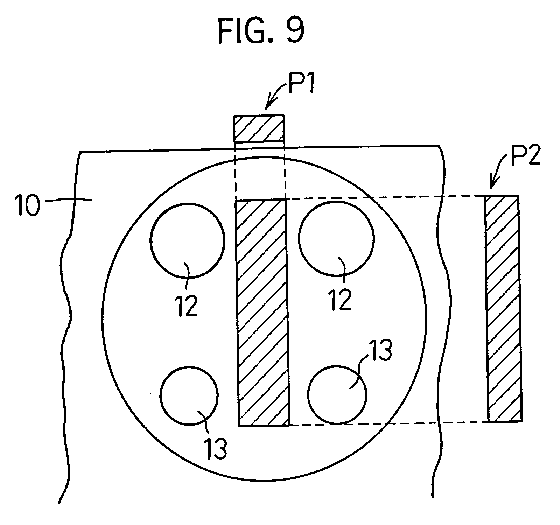

The above-mentioned aluminum alloy having excellent thermal fatigue resistance were evaluated about the real strength with regard to thermal fatigue. The test method and the test conditions were basically the same as those of the above-mentioned performance evaluation test. When the specimens were picked up, in the cases of the specimen NO.1, NO.2 and NO.3, so as to be understood from Figure 9, grooves were formed at the predetermined regions in a valve bridges (= a portion between valves) at the peripheries of valve holes of aluminum cylinder head 10 of the engine, the alloys were built up respectively at each of the grooves by using TIG building up method so that the specimens were cut down from the built up portions. In Figure 9, the cross section of the specimen is shown as P1 and the longitudinal section thereof is shown as P2. 12 denotes a suction valve hole and 13 denotes an exhaust valve hole. In the case of the specimen NO. 4, TIG remelting was conducted at the predetermined region in the valve bridge (= a portion between valves) at the periphery of the valve hole of the cylinder head 10; and after that, the specimen was cut down from the solidified region.

The test conditions are shown in the following TABLE 3. The test results are shown in the following TABLE 4. As is clear from TABLE 4,in the cases of specimens NO.1 and NO.2, excellent thermal fatigue resistance was obtained.

The chemical composition of the built up layer of the specimen NO. 2 comprises: Si in an amount of 6 wt%; Cu in an amount of 1.2 wt%; Fe in an amount of 0.5 wt%; Ti in an amount of 0.17 wt%; V in an amount of 0.07 wt%; Ni in an amount of 0.7 wt%; Mg in an amount of 0.1 wt%; Mn in an amount of 0.4 wt%; and Zr in an amount of less than 0.08 wt%.

**TABLE 3**

| SPECIMEN | BUILDING UP MATERIAL | CYLINDER HEAD | METHOD |
|---|---|---|---|
| NO.1 | composition of specimen No. 9 of the Preferred Embodiment | composition of specimen No. C1 of the Comparative Example | operation of TIG building up welding |
| NO.2 | composition of specimen No. 7 of the Comparative Example | composition of specimen No. C1 of the Comparative Example | operation of TIG building up welding |
| NO.3 | composition of specimen No. 3 of the Comparative Example | composition of specimen No.C1 of the Comparative Example | operation of TIG building up welding |
| NO.4 | - | composition of specimen No.C1 of the Comparative Example | operation of TIG remelting welding |

**TABLE 4**

| SPECIMEN | BREAKAGE LIFE DURATION (CYCLE) |
|---|---|
| NO.1 | 4800 |
| NO.2 | 3200 |
| NO.3 | 800 |
| NO.4 | 1490 |

### Industrial Utility Field

The alloy, aluminum alloy and aluminum alloy member of the present invention can be utilized as aluminum member such as a building up layer used at high temperature, in which thermal fatigue resistance is required.

## Claims

1. An alloy having excellent thermal fatigue resistance comprising: a metallic matrix; and heat resistant particles X which are dispersed in said matrix and whose breadth is not more than 20 µm and whose length is not more than 50 µm; wherein said heat resistant particles X are included in an amount of 5 to 25 vol% and precipitated particles which are unstable thermally are included in said matrix in an amount of not more than 1 wt%.

2. The alloy having excellent thermal fatigue resistance according to Claim 1, wherein said matrix is solid-solution strengthened; or strengthened by dispersed heat resistant particles Y whose average particle diameter is not more than 1 µm.

3. The alloy having excellent thermal fatigue resistance according to Claim 2, wherein said matrix is an alloy which is mainly composed of Al; and said heat resistant particle X is a metallic particle or an intermetallic compound particle.

4. The alloy having excellent thermal fatigue resistance according to Claim 3, wherein the total amount of solute element being at least one member selected from the group consisting of Ti, Zr and V is conducted in an amount of 0.05 to 0.8 wt% in said matrix.

5. An aluminum alloy having excellent thermal fatigue resistance comprosomg: Si in an amount of 4 to 12 wt%;both of Cu and Mg, as impurities, in an amount of not more than 0.2 wt%; and the balance of Al and impurities.

6. An aluminum alloy having excellent thermal fatigue resistance comprising: Si in an amount of 4 to 12 wt%;both of Cu and Mg, as impurities, in an amount of not more than 0.2 wt%; furthermore, at least one member selected from the group consisting of Ti in an amount of 0.05 to 1.0 wt%, Zr in an amount of 0.05 to 1.0 wt% and V in an amount of 0.05 to 1.0 wt%;and the balance of Al and impurities.

7. An aluminum alloy having excellent thermal fatigue resistance comprising: Si in an amount of 4 to 12 wt%;both of Cu and Mg, as impurities, in an amount of not more than 0.2 wt%; at least one member selected from the group consisting of Ti in an amount of 0.05 to 1.0 wt%, Zr in an amount of 0.05 to 1.0 wt% and V in an amount of 0.05 to 1.0 wt%;furthermore at least one member selected from the group consisting of Fe in an amount of 0.15 to 1.5 wt%, Mn in an amount of 0.15 to 1.5 wt% and Ni in an amount of 0.25 to 3 wt%;and the balance of Al and impurities.

8. An aluminum alloy member having excellent thermal fatigue resistance comprising: an improved thermal fatigue resistant portion which has excellent thermal fatigue and which is formed by building up bonding of the alloy according to one of Claims 1 to 7 on the surface of a heat distortion concentration portion of said matrix made of aluminum alloy.
